# EUROPÄISCHE PATENTANMELDUNG

(11) **EP 4 744 841 A1**
(43) Veröffentlichungstag der Anmeldung: **20.05.2026**
(21) Anmeldenummer: 25215592.4
(22) Anmeldetag: 13.11.2025
(51) Int. Cl.: B25J 9/16, B25J 13/00, B25J 19/02

(54) **SYSTEM, VERARBEITUNGSVORRICHTUNG, VERWENDUNG EINES SYSTEMS UND VERFAHREN ZUR GESTEN-BASIERTEN STEUERUNG EINES INDUSTRIEROBOTERS MIT EINEM BEWEGLICHEN ABSCHNITT**

(30) Priorität: 15.11.2024 DE 102024133528
(71) Anmelder: SICK AG, 79183 Waldkirch (DE)
(72) Erfinder: ERLEWEIN, Patrick, 79279 Vörstetten (DE); FRANZ, Max, 79254 Oberried (DE)
(74) Vertreter: Manitz Finsterwald Patent- und Rechtsanwaltspartnerschaft mbB

(57) **Zusammenfassung**

Die Erfindung betrifft ein System zur Steuerung eines Industrieroboters, umfassend den Industrieroboter, wobei der Industrieroboter einen beweglichen Abschnitt umfasst; zumindest einen optoelektronischen Sensor, wobei der optoelektronische Sensor an dem beweglichen Abschnitt des Industrieroboters angebracht ist und ausgebildet ist, einen Überwachungsbereich in einer Umgebung zumindest des beweglichen Abschnitts des Industrieroboters zu erfassen und dabei Daten über den Überwachungsbereich zu gewinnen, insbesondere mittels Laufzeitverfahren zu messen; und eine Verarbeitungsvorrichtung, die ausgebildet ist, in den gewonnenen Daten über den Überwachungsbereich eine in dem Überwachungsbereich von zumindest einem Objekt, insbesondere von einem Bediener, ausgeführte Geste zu erkennen, und eine Steuerung des Industrieroboters entsprechend der erkannten Geste auszulösen.

## Beschreibung

Die Erfindung betrifft System, eine Verarbeitungsvorrichtung, eine Verwendung eines Systems und ein Verfahren zur Gesten-basierten Steuerung eines Industrieroboters mit einem beweglichen Abschnitt.

Um beispielsweise Maschinenaktionen eines Industrieroboters zu bestätigen oder abzubrechen, kann die Eingabe von Steuersignalen durch den Benutzer notwendig sein, was die Aufmerksamkeit des Benutzers auf die Eingriffsstelle (z.B. die Werkbank und/oder das Werkstück) und folglich die Produktivität verringern kann. Das Vorsehen von herkömmlichen Bedienelementen, wie z.B. Knöpfen, Hebeln oder Tastfelder, kann zu höheren Kosten führen. Zudem können die Hardware-Komponenten der herkömmlichen Bedienelemente zusätzliche Hindernisse auf der Werkbank darstellen und von dem Bediener als störend empfunden werden.

Darüber hinaus können bei herkömmlichen Systemen mehrere separate Bedienelemente erforderlich sein, wenn Eingaben an verschiedenen Stellen und/oder unterschiedliche Arten von Eingaben erforderlich sind. Bei einer Änderung der Anwendung (z.B. der von dem Industrieroboter ausgeführten bzw. auszuführenden Aktion) kann eine umständliche Anpassung der Bedienelemente oder das Hinzufügen weiterer Bedienelemente notwendig sein. Zudem sind herkömmliche Systeme insbesondere bei komplexeren Abfolgen von Steuerungsvorgängen für den Bediener oft nicht intuitiv.

Der Erfindung liegt die Aufgabe zugrunde, die Steuerung eines Industrieroboters flexibler, effizienter und/oder für den Bediener intuitiver zu gestalten.

Zur Lösung der Aufgabe ist ein System zur Steuerung eines Industrieroboters mit den Merkmalen des Anspruchs 1 vorgesehen.

Das erfindungsgemäße System zur Steuerung eines Industrieroboters umfasst den Industrieroboter, wobei der Industrieroboter einen beweglichen Abschnitt umfasst, und zumindest einen optoelektronischen Sensor, wobei der optoelektronische Sensor an dem beweglichen Abschnitt des Industrieroboters angebracht ist und ausgebildet ist, einen Überwachungsbereich in einer Umgebung zumindest des beweglichen Abschnitts des Industrieroboters zu erfassen (insbesondere zu überwachen) und dabei Daten über den Überwachungsbereich zu gewinnen, insbesondere mittels Laufzeitverfahren zu messen. Das System umfasst ferner eine Verarbeitungsvorrichtung, die ausgebildet ist, in den gewonnenen Daten über den Überwachungsbereich eine in dem Überwachungsbereich von zumindest einem Objekt, insbesondere von einem Bediener, ausgeführte Geste zu erkennen, und eine Steuerung des Industrieroboters entsprechend der erkannten Geste auszulösen.

Der Erfindung liegt mit anderen Worten der Gedanke zugrunde, Sensoren, die an dem beweglichen Abschnitt des Industrieroboters vorhanden sind und von diesem mitbewegt werden, zur auf der Erkennung von Gesten basierenden Steuerung des Industrieroboters zu nutzen. Entsprechend der erkannten Geste kann beispielsweise von der Verarbeitungsvorrichtung ein Befehl ausgegeben werden, welcher an den Industrieroboter (bzw. dessen Steuerung) übermittelt und von dem Industrieroboter ausführt wird. Der optoelektronische Sensor als Schnittstellen zum Bedienen des Industrieroboters bzw. als Bedienelement wird automatisch mit dem beweglichen Abschnitt des Industrieroboters und folglich mit dem Werkstück mitgeführt. Keine weiteren, über den Arbeitsbereich des Industrieroboters verteilten Bedienelemente sind notwendig, was die Effizienz erhöht. Zudem können verschiedene Befehle durch Ausführung unterschiedlicher Gesten über eine einheitliche Schnittstelle eingegeben werden, was die Handhabung für den Bediener einfacher gestalten kann, ohne dabei die Funktionalität des Systems zu beschränken. Änderungen in der Anwendung können flexibel (z.B. durch Änderung der Parametrisierung) und ohne Änderung der Hardware vorgenommen werden. Insbesondere können neue Gesten für neue Befehle eingelernt oder bereits definierte Geste angepasst werden. Dies kann erlauben, neue Anwendungen bzw. Aktionen mit dem Industrieroboter auszuführen, ohne dass die Hardware der Bedienelemente ausgetauscht werden muss. Die Eingabe des Bedieners kann direkt an der Eingriffsstelle und intuitiv mittels Ausführung von Gesten erfolgen, was die Handhabung für den Bediener einfacher und komfortabler gestalten kann, die Aufmerksamkeit des Benutzers auf die Eingriffsstelle (d.h. die Werkbank und/oder das Werkstück) weniger beeinträchtigen kann oder nicht beeinträchtigt, und folglich die Produktivität erhöhen kann. Insgesamt kann die Mensch-Maschine-Interaktion verbessert werden.

Mit dem Objekt kann ein Bediener, insbesondere eine Hand oder beide Hände des Bedieners, oder zum Beispiel auch ein Roboter gemeint sein.

Die Verarbeitungsvorrichtung kann ausgebildet sein, eine Bewegung des Industrieroboters entsprechend einer Bewegung des Bedieners auszulösen.

Die Verarbeitungsvorrichtung kann mit dem Industrieroboter in kabelloser oder kabelgebundener Signalverbindung stehen und entsprechend der erkannten Geste ein Steuersignal an eine Steuerung des Industrieroboters senden. Zusätzlich oder alternativ kann die Verarbeitungsvorrichtung den Industrieroboter direkt steuern.

Die Verarbeitungsvorrichtung kann als separate Einheit vorhanden sein, Teil des optoelektronischen Sensors sein, Teil des Industrieroboters sein, von dem optoelektronischen Sensor bereitgestellt werden und/oder von dem Industrieroboter bereitgestellt werden. Die Verarbeitungsvorrichtung kann auch, ganz oder teilweise, durch einen Remote-Server bereitgestellt werden. Die Verarbeitungsvorrichtung kann mit dem optoelektronischen Sensor in kabelloser oder kabelgebundener Signalverbindung stehen. Die Verarbeitungsvorrichtung kann einen Prozessor oder einen Mikroprozessor, umfassen. Die Verarbeitungsvorrichtung kann gängige Mittel (insbesondere Algorithmen) zur Gestenerkennung umfassen und/oder auf diese zugreifen. Solche Mittel zur Gestenerkennung sind grundsätzlich bekannt. Beispielsweise kann die Verarbeitungsvorrichtung bekannte Algorithmen zur Erkennung einer Geste aus 2D-Koordinaten einer Bewegung anwenden.

Der optoelektronische Sensor kann einen Lichtsender und einen Lichtempfänger umfassen. Sendelicht kann durch den mit dem Lichtempfänger gekoppelten und/oder gesteuerten Lichtsender erzeugt und in den Überwachungsbereich, insbesondere in der Form zumindest eines Überwachungs- und/oder Messtrahls, ausgesandt werden. Der Lichtempfänger kann von dem Überwachungsbereich (insbesondere von Objekten in dem Erfassungsbereich) remittiertes Sendelicht als Empfangslicht empfangen und basierend auf dem empfangenen Empfangslicht mittels Lichtlaufzeitverfahren Daten über den Überwachungsbereich, insbesondere Abstandswerte (relativ zu dem optoelektronischen Sensor) von Objekten in dem Überwachungsbereich, messen.

Der bewegliche Abschnitt des Industrieroboters umfasst vorzugsweise ein Roboterwerkzeug. Der bewegliche Abschnitt kann einen Roboterarm umfassen oder Teil eines Roboterarms sein. Der Industrieroboter kann auch mehr als einen beweglichen Abschnitt umfassen, also z.B. zwei, drei, oder mehr bewegliche Abschnitte, wobei nur bestimme oder alle beweglichen Abschnitte mit einem optoelektronischen Sensor ausgestatten sein können.

Es versteht sich, dass basierend auf der Gestenerkennung auch andere Funktionen ausgelöst werden können, wie beispielsweise die Ausgabe eines Signals (insbesondere eines Warnsignals), der Versand einer Benachrichtigung (z.B. auf eine Anzeigeeinrichtung bei einem anderen Bediener) und/oder die Steuerung eines anderen Industrieroboters.

Gemäß einer Ausführungsform umfasst der optoelektronische Sensor einen Laserscanner. Zusätzlich oder alternativ kann der optoelektronische Sensor einen Radarsensor, Ultraschallsensor, eine 3D-Kamera oder weiteres umfassen.

Der optoelektronische Sensor kann einen End-of-Arm-Safeguard Sensor umfassen oder ein End-of-Arm-Safeguard Sensor sein.

Gemäß einer Ausführungsform umfasst der optoelektronische Sensor einen Sicherheitssensor. In anderen Worten kann ein an dem Industrieroboter vorhandener Sicherheitssensor für die Gestenerkennung wiederverwendet werden. Auf diese Weise können die Komponenten des Systems doppelt und damit effizienter genutzt werden. Alternativ kann der optoelektronische Sensor allein, d.h. dediziert, zur Gestenerkennung ausgebildet sein.

In dem optoelektronischen Sensor ist vorzugsweise ein Schutzfeld angelegt, bei dessen Verletzung ein sicherheitsgerichtetes Signal ausgegeben wird. Dabei können die hierin verwendeten Begriffe sicher oder Sicherheit im Sinne von bestimmten sicherheitsspezifischen Normen verstanden werden, wie beispielsweise ISO 13849 oder IEC 62998. Das sicherheitsgerichtete Signal kann ein Warnsignal an den Bediener umfassen und/oder ein Versetzen des Industrieroboters in einen abgesicherten Steuerungsmodus auslösen. Die Verarbeitungsvorrichtung kann ausgebildet sein, bei Erkennen einer Schutzfeldverletzung ohne Erkennen einer Geste die Ausgabe eines sicherheitsgerichteten Signals auszulösen. Zusätzlich oder alternativ kann der Bereich, in welchem die Geste ausgeführt wird, aus dem Schutzfeld ausgeschnitten sein.

Gemäß einer Ausführungsform ist der von dem optoelektronischen Sensor erfasste Überwachungsbereich von dem beweglichen Abschnitt des Industrieroboters weg ausgerichtet. In anderen Worten zeigt das Sichtfeld des Sensors von dem beweglichen Abschnitt des Industrieroboters weg. Auf diese Weise kann sichergestellt und/oder erleichtert werden, dass die in der Nähe der und/oder an der Eingriffsstelle, an welchem sich z.B. das Werkstück befindet, ausgeführte Geste erkannt werden kann.

Gemäß einer Ausführungsform ist die Ausrichtung des Überwachungsbereichs im Wesentlichen parallel zu oder gleich der Ausrichtung des beweglichen Abschnitts. In anderen Worten kann der Überwachungsbereich als "Verlängerung" des beweglichen Abschnitts gesehen werden. Auf diese Weise kann sichergestellt und/oder erleichtert werden, dass die in der Nähe der und/oder an der Eingriffsstelle, an welchem sich z.B. das Werkstück befindet, ausgeführte Geste erkannt werden kann.

Gemäß einer Ausführungsform umfasst die Geste eine Bewegung des Objekts, insbesondere des Bedieners, und vorzugsweise eine Handbewegung des Bedieners.

Gemäß einer Ausführungsform ist die Geste durch das Objekt, insbesondere den Bediener, einlernbar.

Gemäß einer Ausführungsform ist die Geste definiert als Eingreifen an einer Position in den Überwachungsbereich, Herausgreifen an einer Position aus dem Überwachungsbereich, eine Bewegung zwischen zwei Positionen innerhalb des Überwachungsbereichs, Nachfahren eines vorbestimmten Pfads innerhalb des Überwachungsbereichs, Ballen einer Faust, Öffnen einer Faust, Überkreuzen der Arme, seitlicher Wisch, Wisch in Richtung des Sensors, Wisch vom Sensor weg, eine Bewegung der ausgestreckten Arme und/oder eine Bewegung der Hand in Richtung des Sensors, und/oder eine Bewegung der ausgestreckten Arme und/oder eine Bewegung der Hand von dem Sensor weg.

Gemäß einer Ausführungsform ist die Geste als eine Kombination mehrerer Bewegungen definiert.

Gemäß einer Ausführungsform löst eine lineare Bewegung des Objekts, insbesondere eine Handbewegung des Bedieners, zur Seite, nach oben, nach unten oder entlang einer Diagonale, eine entsprechende Bewegung des Industrieroboters aus. In anderen Worten kann der Industrieroboter der Handbewegung des Bedieners nachfolgen.

Gemäß einer Ausführungsform löst eine Bewegung des Objekts, insbesondere eine Handbewegung des Bedieners, entlang einer (im Wesentlichen geschlossenen) Ellipse oder eines (im Wesentlichen geschlossenen) Kreises eine Wiederholung einer von dem Industrieroboter ausgeführten Aktion und/oder einer für die Ausführung durch den Industrieroboter geplanten Aktion aus.

Gemäß einer Ausführungsform löst das Bilden eines Kreuzes mit einer Bewegung des Objekts, insbesondere mit einer Handbewegung des Bedieners, das Abbrechen der von dem Industrieroboter ausgeführten Aktion und/oder das Löschen der für die Ausführung durch den Industrieroboter geplanten Aktion aus. Mit dem Bilden eines Kreuzes kann eine Abfolge linearen Bewegungen entlang der Vertikalen (z.B. in y-Richtung), Diagonalen (z.B. in xy-Ebene) und Horizontalen (z.B. in x-Richtung) oder in umgekehrter Reihenfolge gemeint sein.

Gemäß einer Ausführungsform löst das im Wesentlichen gleichzeitige Bewegen von zwei Objekten, insbesondere beider Hände des Bedieners, aus dem Überwachungsbereich heraus eine Bestätigung einer Erledigung der von dem Industrieroboter ausgeführten Aktion und/oder der für die Ausführung durch den Industrieroboter geplanten Aktion aus. Vorzugsweise ist der Industrieroboter ausgebildet, auf die Bestätigung der Erledigung hin seine Bewegungsgeschwindigkeit zu verändern (d.h. zu verlangsamen oder zu beschleunigen), die Ausführung der Aktion zu stoppen, die Ausführung einer anderen Aktion zu starten, oder in eine Halteposition zu verfahren.

Gemäß einer Ausführungsform ist die Verarbeitungsvorrichtung ausgebildet, die Geste basierend auf zumindest einem ermittelten Entfernungswert einer Bewegung des Objekts, insbesondere des Bedieners, zu erkennen. Zusätzlich oder alternativ umfasst der Überwachungsbereich zumindest eine Detektionszone und die Verarbeitungsvorrichtung ist ausgebildet, die Geste basierend auf einer Detektion des Objekts, insbesondere des Bedieners (und bevorzugt seiner Hand), in einer bestimmten Detektionszone des Überwachungsbereichs und/oder basierend auf einer Reihenfolge von Detektionen des Objekts, insbesondere des Bedieners (und bevorzugt seiner Hand), in bestimmten Detektionszonen des Überwachungsbereichs zu erkennen. Beispielsweise kann eine Detektion oder nicht-Detektion als Wahr- bzw. Falsch-Information (z.B. als 1 oder 0) in eine Liste gespeichert werden. Zusätzlich oder alternativ kann jeder Detektionszone eine Kennung bzw. ein Identifier zugeordnet sein. Wird das Objekt detektiert, kann der Identifier der betreffenden Detektionszone in eine Liste gespeichert werden. Anhand der Reihenfolge der in der Liste gespeicherten Wahr-/Falschinformationen und/oder Identifier kann dann die Geste festgestellt werden. Die Detektionszonen (und zusätzlich auch bestimmte Bereiche um diese herum) können aus einem Schutzfeld des optoelektronischen Sensors ausgeschnitten sein.

Gemäß einer Ausführungsform umfasst das System, und insbesondere die Verarbeitungsvorrichtung, eine Anzeigeeinrichtung, vorzugsweise eine Augmented-Reality-Brille, welche ausgebildet ist, dem Bediener das erfolgreiche Erkennen der Geste, beispielsweise durch Ausgabe eines Lichtsignals oder eine Farbänderung einer visualisierten geometrischen Form, anzuzeigen. Zusätzlich oder alternativ ist die Anzeigeeinrichtung ausgebildet, dem Bediener den Überwachungsbereich, zumindest eine Detektionszone in dem Überwachungsbereich und/oder einen Pfad, vorzugsweise in einer Augmented-Reality-Ansicht, als zumindest eine geometrische Form zu visualisieren. Zusätzlich oder alternativ kann die Anzeigeeinrichtung zumindest eine LED umfassen (vorzugsweise eine Reihe von LEDs), die an dem (insbesondere ringförmig um den) beweglichen Abschnitt des Industrieroboters angeordnet ist (bzw. sind).

Gemäß einer Ausführungsform ist die Anzeigeeinrichtung ausgebildet, dem Bediener zumindest zwei Detektionszonen des Überwachungsbereichs zu visualisieren, wobei die Detektionszonen vorzugsweise für den Bediener mit zumindest einer Zahl, zumindest einem Symbol (z.B. ein Pfeil, Stern, Tierbild, Strich, oder ähnliches), zumindest einem Buchstaben und/oder farblich gekennzeichnet sind, wobei die Zahl, das Symbol, der Buchstabe und/oder die Farbe (z.B. die farbliche Gestaltung, insbesondere ein Farbverlauf) für die Ausführung der Geste die Reihenfolge der in den Detektionszonen auszulösenden Detektionen angeben.

Gemäß einer Ausführungsform ist der Überwachungsbereich durch lediglich an einer äußeren Begrenzung ausgesandte Überwachungsstrahlen begrenzt, wobei die äußere Begrenzung bevorzugt ringförmig ist. Die Messstrahlen können folglich den beweglichen Abschnitt (der z.B. ein Roboterwerkzeug und/oder einen Greifer umfasst) umhüllen und sichern ihn so als Schutzmantel ab. Beispielsweise sind dafür Distanzsensoren ringförmig angeordnet. Deren Messstrahlen können einen Anstellwinkel aufweisen.

Gemäß einer Ausführungsform umfasst der Überwachungsbereich einen zweidimensionalen, vorzugsweise dreidimensionalen Raum, wobei die Geste vorzugsweise als Bewegung des Objekts, insbesondere des Bedieners, in zwei Dimensionen, bevorzugt drei Dimensionen, definiert ist.

Weiterer Gegenstand der Erfindung ist eine hierin beschriebene Verarbeitungsvorrichtung zur Steuerung eines Industrieroboters mit einem beweglichen Abschnitt.

Weiterer Gegenstand der Erfindung ist die Verwendung eines hierin beschriebenen Systems zur Steuerung eines Industrieroboters mit einem beweglichen Abschnitt.

Weiterer Gegenstand der Erfindung ist ein Verfahren zur Steuerung eines Industrieroboters mit einem beweglichen Abschnitt, wobei der bewegliche Abschnitt vorzugsweise ein Roboterwerkzeug umfasst, wobei ein Überwachungsbereich in einer Umgebung zumindest des beweglichen Abschnitts des Industrieroboters mittels eines an dem beweglichen Abschnitt angebrachten optoelektronischen Sensors erfasst (insbesondere überwacht) wird und dabei Daten über den Überwachungsbereich gewonnen werden, insbesondere mittels (Licht-)Laufzeitverfahren gemessen werden; wobei eine von zumindest einem Objekt, insbesondere von einem Bediener, in dem Überwachungsbereich ausgeführte Geste in den gewonnenen Daten über den Überwachungsbereich erkannt wird; und wobei eine Steuerung des Industrieroboters entsprechend der erkannten Geste ausgelöst wird.

Es versteht sich, dass das bezüglich des erfindungsgemäßen Systems Beschriebene auch für die Verarbeitungsvorrichtung, die Verwendung des Systems und das Verfahren gilt. Dies gilt insbesondere für Ausführungsformen und Vorteile. Weiterhin ist es zu verstehen, dass alle hierin offenbarten Merkmale und Ausführungsformen kombiniert werden können, wenn nicht ausdrücklich anders angegeben.

Nachfolgend wird die Erfindung rein beispielhaft anhand möglicher Ausführungsformen unter Bezugnahme auf die beigefügte Zeichnung beschrieben. Es zeigen:
- Fig. 1: eine schematische Darstellung eines Systems zur Steuerung eines Industrieroboters mit einem beweglichen Abschnitt; und
- Fig. 2: eine schematische Darstellung des optoelektronischen Sensors des Systems in Fig. 1.

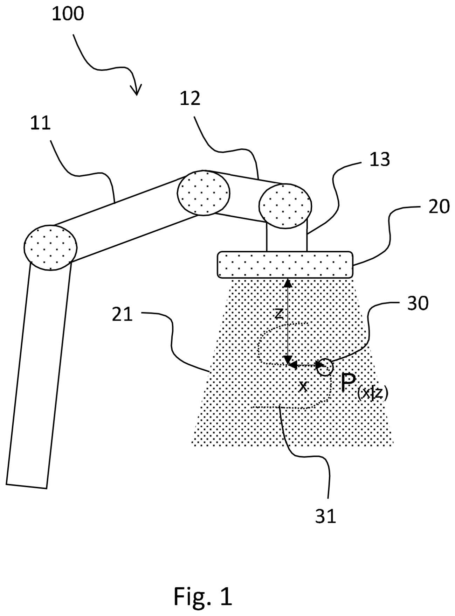

Fig. 1 gezeigt schematisch ein System 100 zur Steuerung eines Industrieroboters mit zumindest einem beweglichen Abschnitt, wobei der in Fig. 1 dargestellte Industrieroboter einen ersten, zweiten und dritten beweglichen Abschnitt 11, 12, 13 umfasst. Es versteht sich, dass der Industrieroboter auch wendiger oder mehr als drei bewegliche Abschnitte umfassen kann, also beispielsweise nur einen beweglichen Abschnitt oder aber auch vier, fünf oder mehr bewegliche Abschnitte.

Das System 100 in Fig. 1 umfasst den Industrieroboter und zumindest einen optoelektronischen Sensor 20, wobei der optoelektronische Sensor 20 an dem dritten beweglichen Abschnitt 13 des Industrieroboters angebracht und ausgebildet ist, einen Überwachungsbereich 21 in einer Umgebung zumindest des dritten beweglichen Abschnitts 13 des Industrieroboters zu erfassen und dabei Daten über den Überwachungsbereich 21 zu gewinnen, insbesondere mittels Laufzeitverfahren zu messen. Der dritte Abschnitt 13 kann ein Roboterwerkzeug, insbesondere einen Greifer, umfassen. Das System 100 umfasst ferner eine Verarbeitungsvorrichtung (nicht in Fig. 1 gezeigt), die ausgebildet ist, in den gewonnenen Daten über den Überwachungsbereich 21 eine in dem Überwachungsbereich 21 von zumindest einem Objekt 30, insbesondere von einem Bediener, ausgeführte Geste zu erkennen, und eine Steuerung des Industrieroboters entsprechend der erkannten Geste auszulösen. Auf diese Weise kann der optoelektronische Sensor 20, der an dem beweglichen Abschnitt 13 des Industrieroboters vorhanden ist und von diesem mitbewegt werden kann, zur auf der Erkennung von Gesten basierenden Steuerung des Industrieroboters genutzt werden. Entsprechend der erkannten Geste kann beispielsweise von der Verarbeitungsvorrichtung (nicht in Fig. 1 gezeigt) ein Befehl ausgegeben werden, welcher an den Industrieroboter (bzw. dessen Steuerung, welche nicht in Fig. 1 gezeigt ist) übermittelt und von dem Industrieroboter ausführt wird.

Der Überwachungsbereich 21 kann einen zweidimensionalen Raum, und vorzugsweise einen dreidimensionalen Raum, umfassen, wobei die Geste als Bewegung des Objekts 30, insbesondere einer Hand des Bedieners, in zwei Dimensionen (z.B. in einer xy-Ebene, yz-Ebene oder xz-Ebene), bevorzugt drei Dimensionen (z.B. in einem xyz-Koordinatensystem), definiert sein kann. Die Daten über den Überwachungsbereich können Abstandswerte des Objekts 30 (z.B. relativ zu dem optoelektronischen Sensor gesehen) umfassen und beispielsweise in x-, y- und/oder z-Koordinaten angeben werden bzw. in x-, y-, und/oder z-Koordinaten umgerechnet werden. Wie in Fig. 1 dargestellt kann die Position des Objekts 30, während dieses sich auf einem Pfad 31 in dem Überwachungsbereich 21 bewegt, als xz-Koordinatenwert P_{(x|z)} erfasst werden. Möglich ist beispielsweise auch die Erfassung der Position des Objekts 30 als yz-Koordinatenwert P_{(y|z)}, xy-Koordinatenwert P_{(x|y)} oder als xyz-Koordinatenwert P_{(x|y|z)}.

Die Geste kann definiert sein als Eingreifen an einer Position in den Überwachungsbereich 21, Herausgreifen an einer Position aus dem Überwachungsbereich 21, eine Bewegung zwischen zwei Positionen innerhalb des Überwachungsbereichs 21, Nachfahren eines vorbestimmten Pfads 31 innerhalb des Überwachungsbereichs 21, Ballen einer Faust, Öffnen einer Faust, Überkreuzen der Arme, seitlicher Schritt, Schritt auf den Sensor 20 zu, Schritt von dem Sensor 20 weg, eine Bewegung der ausgestreckten Arme und/oder eine Bewegung der Hand in Richtung des Sensors 20, und/oder eine Bewegung der ausgestreckten Arme und/oder eine Bewegung der Hand von dem Sensor 20 weg. Die Geste kann als eine Kombination mehrerer Bewegungen definiert sein. Wie in Fig. 1 gezeigt kann die Bewegung des Objekts 30 entlang des Pfads 31 als Vielzahl erfasster Position bzw. Koordinatenwerte P parametrisiert bzw. nachverfolgt werden.

In Tabelle 1 sind Beispielgesten mit zugehöriger Bewegung und entsprechendem Befehl aufgelistet. Nach Beispiel 1 löst eine lineare Bewegung des Objekts 30 zur Seite, nach oben, nach unten oder entlang einer Diagonale, eine entsprechende Bewegung des Industrieroboters aus. Nach Beispiel 2 löst eine Bewegung des Objekts 30 entlang einer (im Wesentlichen geschlossenen) Ellipse oder eines (im Wesentlichen geschlossenen) Kreises eine Wiederholung einer von dem Industrieroboter ausgeführten Aktion und/oder einer für die Ausführung durch den Industrieroboter geplanten Aktion aus. Nach Beispiel 3 löst das Bilden eines Kreuzes mit einer Bewegung des Objekts 30 das Abbrechen der von dem Industrieroboter ausgeführten Aktion und/oder das Löschen der für die Ausführung durch den Industrieroboter geplanten Aktion aus. Mit dem Bilden eines Kreuzes kann eine Abfolge linearen Bewegungen entlang einer Vertikalen (z.B. in z-Richtung oder y-Richtung), einer Diagonalen (z.B. in xy-Ebene oder in der xz-Ebene) und einer Horizontalen (z.B. in x-Richtung) oder in umgekehrter Reihenfolge gemeint sein. Gemäß Beispiel 4 löst das im Wesentlichen gleichzeitige Bewegen von zwei Objekten 30, insbesondere beider Hände des Bedieners, aus dem Überwachungsbereich 21 heraus eine Bestätigung einer Erledigung (d.h. "erledigt" oder "ausgeführt") der von dem Industrieroboter ausgeführten Aktion aus.

**Tabelle 1:**

| Beispielgeste | Bewegung | Befehl |
|---|---|---|
| 1 | Lineare Bewegung (nach oben, nach unten, rechts, links, diagonal) | Maschinenbewegung |
| 2 | Bewegung entlang eines Kreises oder einer Ellipse | Wiederholung |
| 3 | Kreuz-Bewegung | Abbruch |
| 4 | Bewegung beider Hände gleichzeitig nach Außen aus dem Überwachungsbreich | Bestätigung "Ausgeführt" |

Wie in Fig. 1 dargestellt ist der von dem optoelektronischen Sensor 20 erfasste Überwachungsbereich 21 von dem dritten beweglichen Abschnitt 13 des Industrieroboters weg ausgerichtet. Wie in Fig.1 ersichtlich kann die Ausrichtung des Überwachungsbereichs 21 im Wesentlichen parallel zu oder gleich der Ausrichtung des dritten beweglichen Abschnitts 13 (hier in z-Richtung) sein. Auf diese Weise kann sichergestellt und/oder erleichtert werden, dass die in der Nähe der und/oder an der Eingriffsstelle, an welchem sich z.B. ein Werkstück befindet, ausgeführte Geste erkannt werden kann.

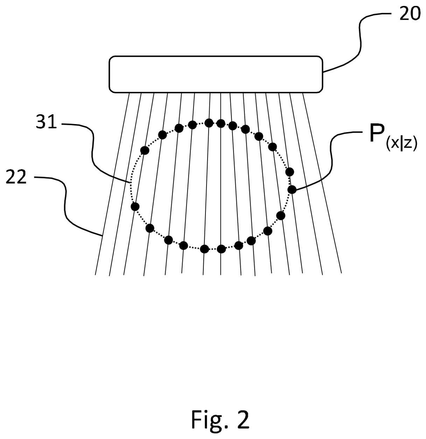

Wie in Fig. 2 schematisch dargestellt kann der optoelektronische Sensor 20 einen Laserscanner umfassen, welcher Sendelicht in Form von mehreren Überwachungsstrahlen 22 in den Überwachungsbereich aussendet. Das Sendelicht der Überwachungsstrahlen 22 kann von dem Objekt 30, während dieses sich auf dem Pfad 31 bewegt, remittiert (und insbesondere reflektiert) werden und zu dem optoelektronischen Sensor 20 als Empfangslicht zurückgeworfen werden. Der optoelektronische Sensor 20 kann dann basierend auf dem empfangenen Empfangslicht mittels Lichtlaufzeitverfahren Abstandswerte des Objekts 30 (relativ zu dem optoelektronischen Sensor 20) messen. Wie in Fig. 2 dargestellt kann beispielweise für jeden Kreuzungspunkt des Objekts 30 mit einem der Überwachungsstrahlen 22 auf seinem Pfad 31 durch den Überwachungsbereich 21 ein Koordinatenwert, zum Beispiel P_{(x|z)}, erhalten werden. Auf diese Weise kann die Bewegung des Objekts 30 auf dem Pfad 31 nachverfolgt und die Geste erkannt werden. Der in Fig. 2 dargestellte nachverfolgte Pfad 31 ist kreis- oder ellipsenförmig, was der Beispielgeste 2 aus Tabelle 1 entspricht und folglich eine Wiederholung einer von dem Industrieroboter ausgeführten Aktion und/oder einer für die Ausführung durch den Industrieroboter geplanten Aktion auslöst.

### Bezugszeichenliste

- 11: erster beweglicher Abschnitt
- 12: zweiter beweglicher Abschnitt
- 13: dritter beweglicher Abschnitt
- 20: optoelektronischer Sensor
- 21: Überwachungsbereich
- 22: Überwachungsstrahlen
- 30: Objekt
- 31: Pfad
- 100: System

## Patentansprüche

1. System (100) zur Steuerung eines Industrieroboters, umfassend den Industrieroboter, wobei der Industrieroboter einen beweglichen Abschnitt (13) umfasst;
zumindest einen optoelektronischen Sensor (20), wobei der optoelektronische Sensor (20) an dem beweglichen Abschnitt (13) des Industrieroboters angebracht ist und ausgebildet ist, einen Überwachungsbereich (21) in einer Umgebung zumindest des beweglichen Abschnitts (13) des Industrieroboters zu erfassen und dabei Daten über den Überwachungsbereich (21) zu gewinnen, insbesondere mittels Laufzeitverfahren zu messen; und
eine Verarbeitungsvorrichtung, die ausgebildet ist,
in den gewonnenen Daten über den Überwachungsbereich (21) eine
in dem Überwachungsbereich (21) von zumindest einem Objekt (30), insbesondere von einem Bediener, ausgeführte Geste zu erkennen, und
eine Steuerung des Industrieroboters entsprechend der erkannten Geste auszulösen.

2. System (100) nach Anspruch 1,
wobei der optoelektronische Sensor (20) einen Laserscanner umfasst, und/oder
wobei der optoelektronische Sensor (20) einen Sicherheitssensor umfasst, wobei in dem optoelektronischen Sensor (20) vorzugsweise ein Schutzfeld angelegt ist, bei dessen Verletzung ein sicherheitsgerichtetes Signal ausgegeben wird.

3. System (100) nach Anspruch 1 oder 2, wobei der von dem optoelektronischen Sensor (20) erfasste Überwachungsbereich (21) von dem beweglichen Abschnitt (13) des Industrieroboters weg ausgerichtet ist.

4. System (100) nach Anspruch 3, wobei die Ausrichtung des Überwachungsbereichs (21) im Wesentlichen parallel zu oder gleich der Ausrichtung des beweglichen Abschnitts (13) ist.

5. System (100) nach einem der voranstehenden Ansprüche,
wobei die Geste eine Bewegung des Objekts (30), insbesondere des Bedieners, und vorzugsweise eine Handbewegung des Bedieners, umfasst; und/oder
wobei die Geste durch das Objekt (30), insbesondere den Bediener, einlernbar ist.

6. System (100) nach Anspruch 5, wobei die Geste definiert ist als Eingreifen an einer Position in den Überwachungsbereich (21), Herausgreifen an einer Position aus dem Überwachungsbereich (21),
eine Bewegung zwischen zwei Positionen innerhalb des Überwachungsbereichs (21),
Nachfahren eines vorbestimmten Pfads (31) innerhalb des Überwachungsbereichs (21),
Ballen einer Faust,
Öffnen einer Faust,
Überkreuzen der Arme,
seitlicher Wisch,
Wisch in Richtung des Sensors (20),
Wisch von dem Sensor (20) weg,
eine Bewegung der ausgestreckten Arme und/oder eine Bewegung der Hand in Richtung des Sensors (20), und/oder
eine Bewegung der ausgestreckten Arme und/oder eine Bewegung der Hand von dem Sensor (20) weg,
wobei die Geste vorzugsweise als eine Kombination mehrerer Bewegungen definiert ist.

7. System (100) nach Anspruch 5 oder 6,
wobei eine lineare Bewegung des Objekts (30), insbesondere eine Handbewegung des Bedieners, zur Seite, nach oben, nach unten oder entlang einer Diagonale, eine entsprechende Bewegung des Industrieroboters auslöst;
wobei eine Bewegung des Objekts (30), insbesondere eine Handbewegung des Bedieners, entlang einer Ellipse oder eines Kreises eine Wiederholung einer von dem Industrieroboter ausgeführten Aktion und/oder einer für die Ausführung durch den Industrieroboter geplanten Aktion auslöst;
wobei das Bilden eines Kreuzes mit einer Bewegung des Objekts (30), insbesondere mit einer Handbewegung des Bedieners, das Abbrechen der von dem Industrieroboter ausgeführten Aktion und/oder das Löschen der für die Ausführung durch den Industrieroboter geplanten Aktion auslöst; und/oder
wobei das im Wesentlichen gleichzeitige Bewegen von zwei Objekten (30), insbesondere beider Hände des Bedieners, aus dem Überwachungsbereich (21) heraus eine Bestätigung einer Erledigung der von dem Industrieroboter ausgeführten Aktion und/oder der für die Ausführung durch den Industrieroboter geplanten Aktion auslöst, wobei der Industrieroboter vorzugsweise ausgebildet ist, auf die Bestätigung der Erledigung hin seine Bewegungsgeschwindigkeit zu verändern, die Ausführung der Aktion zu stoppen, die Ausführung einer anderen Aktion zu starten, oder in eine Halteposition zu verfahren.

8. System (100) nach einem der Ansprüche 5 bis 7,
wobei die Verarbeitungsvorrichtung ausgebildet ist, die Geste basierend auf zumindest einem ermittelten Entfernungswert einer Bewegung des Objekts (30), insbesondere des Bedieners, zu erkennen; und/oder wobei der Überwachungsbereich (21) zumindest eine Detektionszone umfasst und die Verarbeitungsvorrichtung ausgebildet ist, die Geste basierend auf einer Detektion des Objekts (30), insbesondere des Bedieners, in einer bestimmten Detektionszone des Überwachungsbereichs (21) und/oder basierend auf einer Reihenfolge von Detektionen des Objekts (30), insbesondere des Bedieners, in bestimmten Detektionszonen des Überwachungsbereichs (21) zu erkennen.

9. System (100) nach einem der voranstehenden Ansprüche, wobei das System (100), und insbesondere die Verarbeitungsvorrichtung, eine Anzeigeeinrichtung, vorzugsweise eine Augmented-Reality-Brille, umfasst, welche ausgebildet ist,
dem Bediener das erfolgreiche Erkennen der Geste anzuzeigen, und/oder
dem Bediener den Überwachungsbereich (21), zumindest eine Detektionszone in dem Überwachungsbereich (21) und/oder einen Pfad, vorzugsweise in einer Augmented-Reality-Ansicht, als zumindest eine geometrische Form zu visualisieren.

10. System (100) nach Anspruch 8 und 9, wobei die Anzeigeeinrichtung ausgebildet ist, dem Bediener zumindest zwei Detektionszonen des Überwachungsbereichs (21) zu visualisieren, wobei die Detektionszonen vorzugsweise für den Bediener mit zumindest einer Zahl, zumindest einem Symbol, zumindest einem Buchstaben und/oder farblich gekennzeichnet sind, wobei die Zahl, das Symbol, der Buchstabe und/oder die Farbe für die Ausführung der Geste die Reihenfolge der in den Detektionszonen auszulösenden Detektionen angeben.

11. System (100) nach einem der voranstehenden Ansprüche, wobei der Überwachungsbereich (21) durch lediglich an einer äußeren Begrenzung ausgesandte Überwachungsstrahlen (22) begrenzt ist, wobei die äußere Begrenzung bevorzugt ringförmig ist.

12. System (100) nach einem der voranstehenden Ansprüche, wobei der Überwachungsbereich (21) einen zweidimensionalen, vorzugsweise dreidimensionalen Raum umfasst, wobei die Geste vorzugsweise als Bewegung des Objekts (30), insbesondere des Bedieners, in zwei Dimensionen, bevorzugt drei Dimensionen, definiert ist.

13. Verarbeitungsvorrichtung nach einem der voranstehenden Ansprüche zur Steuerung eines Industrieroboters mit einem beweglichen Abschnitt (13).

14. Verwendung eines Systems (100) nach einem der Ansprüche 1 bis 12 zur Steuerung eines Industrieroboters mit einem beweglichen Abschnitt (13).

15. Verfahren zur Steuerung eines Industrieroboters mit einem beweglichen Abschnitt (13), wobei der bewegliche Abschnitt (13) vorzugsweise ein Roboterwerkzeug umfasst,
wobei ein Überwachungsbereich (21) in einer Umgebung zumindest des beweglichen Abschnitts (13) des Industrieroboters mittels eines an dem beweglichen Abschnitt (13) angebrachten optoelektronischen Sensors (20) erfasst wird und dabei Daten über den Überwachungsbereich (21) gewonnen werden, insbesondere mittels Laufzeitverfahren gemessen werden;
wobei eine von zumindest einem Objekt (30), insbesondere von einem Bediener, in dem Überwachungsbereich (21) ausgeführte Geste in den gewonnenen Daten über den Überwachungsbereich (21) erkannt wird; und wobei eine Steuerung des Industrieroboters entsprechend der erkannten Geste ausgelöst wird.
